# EUROPEAN PATENT SPECIFICATION

(11) **EP 2 466 100 B1**
(45) Date of publication and mention of the grant of the patent: **11.09.2019**
(21) Application number: 11193592.0
(22) Date of filing: 14.12.2011
(51) Int. Cl.: F02K 1/30, F02K 9/82

(54) **Method and apparatus for variable exhaust nozzle exit area**
Verfahren und Vorrichtung für einen variablen Abgasdüsenausgangsbereich
Procédé et appareil pour section d'éjection variable

(30) Priority: 14.12.2010 US 968106
(43) Date of publication of application: 20.06.2012
(73) Proprietor: The Boeing Company, Chicago, IL 60606-1596 (US)
(72) Inventor: Winkler, Chad M., Glen Carbon, IL 62034 (US); Dorgan, Andrew J., Edwardsville, IL 62025 (US); Werner, Eric L., Saint Charles, MO 63303 (US)
(74) Representative: Howson, Richard Giles Bentham

(56) References cited:
- EP-A2- 1 158 156
- US-A- 4 686 824
- US-A- 6 112 512
- US-A1- 2010 089 031
- US-B1- 6 679 048
- M. Shandor ET AL: "SECONDARY GAS INJECTION IN A CONICAL ROCKET NOZZLE", AIAA Journal, vol. 1, no. 2, 1 February 1963 (1963-02-01), pages 334-338, XP055546232, US ISSN: 0001-1452, DOI: 10.2514/3.1533

## Description

### BACKGROUND

Exhaust nozzle exit area (A9) control for jet engines enhances engine and aircraft performance. With additional requirements for increased maneuverability and performance of modern jet aircraft as well as survivability requirements, fixed geometry nozzle systems which provide for exit area control including vectored thrust systems have become important in achieving overall performance goals. Exit area control allows tailoring of engine performance for thrust optimization. Mechanical systems often use deflecting surfaces to physically alter nozzle shape and area. Mechanical control of the throat area has been attempted before (see US Patent 2,846,843 to Clark et al, entitled "Variable area convergent-divergent exhaust nozzle and control therefor") which does control the expansion ratio, but with a resulting change in the nozzle flow rate.

Fluidic systems have been employed but typically affect nozzle throat area or result in the generation of shocks in the divergent section which may be undesirable. Fluidic throat area control has been performed by as disclosed in US Patent 5,996,936 to Mueller entitled "Fluidic throat exhaust nozzle", and suffers the same problem of nozzle flow rate variation with a change in expansion ratio. It has been attempted to control A9 with layers of combustible material which burn off during flight to give variable A9. See US Patent Application serial number 09/942,238 to Hawkins and Murdock entitled "Combustible outgassing material lined altitude compensating rocket nozzle". However, it is not always desirable to have combustion occurring on the walls of a nozzle. Nor do combustibles allow cyclic changes of area control during a flight mission as the combustibles can only be used once.

A combined system as disclosed in US Patent 3,010,280 to Hausmann et al entitled "Variable-expansion nozzle" employs blowing combustible mixtures into the divergent section to occupy flow area, thus reducing the overall nozzle exit area. Again, it is not always permissible to use combustibles near the walls of a nozzle due to material limitations.

Mechanical systems are heavy due to the requirements for large control surfaces and actuators. Large amounts of injected flow in fluidic systems are not preferable due to the performance impact on the engine to supply the large amounts of secondary flow for injection (flow that could otherwise be used to produce thrust).

It is therefore desirable to avoid the weight penalties of mechanical nozzle exit area adjustment systems by providing effective exit area control. It is also desirable to provide effective exit area control which does not impact the nozzle throat area, thus easily maintaining the engine mass flow. Additionally, it is desirable to provide effective exit area control which is simple to implement and minimizes thrust losses.

US 6 679 048 B1 describes an apparatus and method for controlling primary fluid flow using secondary fluid flow injection.

EP 1 158 156 A2 describes a fluidic nozzle control system. US4686824A discloses an apparatus for modulating the thrust vector of a rocket motor by injecting hot gas into the divergent section of the rocket nozzle.

### SUMMARY

Embodiments of the disclosure relate generally to the field of area control of jet engine nozzle exhaust and more particularly to embodiments for inducing flow separation in the divergent section of an exhaust nozzle to symmetrically alter the effective divergence angle of the nozzle walls to alter effective exit area.

The disclosed embodiments provide a nozzle with a divergent portion having a divergent wall at a predetermined angle of at least 12° from the streamwise nozzle axis direction. Disturbance generators are located substantially symmetrically opposite on the divergent wall to induce flow separation where the predetermined wall angle is sufficient for the induced flow separation to extend upstream from disturbance generator substantially to the throat of the nozzle. This pressurizes the divergent walls and reduces the effective area of the exhaust flow at the nozzle exit without generating a shock in the divergent portion when accelerating the flow in the convergent-divergent nozzle to supersonic speed. In certain example embodiments the convergent - divergent nozzle has a total angle no greater than 150 degrees.

For one embodiment the disturbance generator is an injection flow slot which may be located at least 50% of a divergence length from the throat of the nozzle to a trailing edge of the nozzle for certain engine and aerodynamic conditions or between 25% and 75% of a divergence length for alternative conditions. If the nozzle has sufficient structural depth, the injection may be performed at or near 100% of the divergence length. Injection flow through the injection slot is controlled between 0% and 4% of total flow for effective area control of the jet flow in the nozzle.

In certain example embodiments the convergent-divergent nozzle is a rectangular or two-dimensional (2D) nozzle having a first injection flow slot on a lower wall of the nozzle and a symmetrical injection flow slot on an upper wall of the nozzle.

In yet other embodiments the convergent-divergent nozzle is a three-dimensional (3D) nozzle having multiple injection flow slots arranged circumferentially around the divergent portion of the nozzle.

In operation the embodiments create a method for exit area reduction by providing a convergent-divergent nozzle with a total angle of less than 150° and a divergence angle of at least 12° or greater with symmetrical disturbance generators located at predetermined locations on opposing surfaces of a divergent portion of the nozzle. Magnitude of the disturbance created by the disturbance generators is controlled to create non-shock induced flow separation from a wall of the divergent portion. The predetermined location of the disturbance generator is defined to create a flow separation zone extending substantially from the nozzle throat to the nozzle trailing edge and the magnitude of the disturbance is controlled to create the flow separation zone with a magnitude to induce a desired reduction in effective exit area (AE9) without generating a shock in the diverging portion when the flow in the convergent-divergent nozzle is accelerated to supersonic speed.

The features, functions, and advantages that have been discussed can be achieved independently in various embodiments of the present invention or may be combined in yet other embodiments further details of which can be seen with reference to the following description and drawings.

### BRIEF DESCRIPTION OF THE DRAWINGS

FIG. 1 is side cross section view of an example embodiment with a 2D Nozzle;
FIG. 2 is a side view diagram of angular relationships of convergent and divergent portions of the nozzle of FIG. 1;
FIGs. 3A - 3C are side views of representations of the flow field from a Computational Fluid Dynamics (CFD) solution for the 2D nozzle with no secondary flow, 2.6% secondary flow and 7.6% secondary flow;
FIG. 4 is a graph of thrust coefficient created by injected flow in the 2D nozzle represented in FIGs. 3A- 3C;
FIG. 5 is a partial section isometric view of an example 3D nozzle embodiment; and,
FIG. 6 is a flow chart depicting operation of the example nozzle for exit area control.

### DETAILED DESCRIPTION

The embodiments described herein demonstrate effective exit area control employing a nozzle which has a convergent and divergent cross section. The divergent portion incorporates walls at an angle which is steeper than normally used in conventional nozzle designs. The steeper wall is then exploited to efficiently generate flow separation when a disturbance is introduced on the wall. Inducing flow separation in the divergent section of the nozzle fluidically changes the divergence angle of the flow from the wall in a two-dimensional (2D) nozzle or comparable structure in a three-dimensional (3D) nozzle. This results in a reduction in area of the exhaust flow as the effective shape of the divergent jet in the nozzle is separated from the wall. The disturbance which causes separation can be a fluidic jet, pulsed jet, or synthetic jet such as a vibrating membrane or sonic impulse with no net mass flux or other method to produce a disturbance to cause separation of the jet flow from the wall. The wall angle is such that the separation travels upstream from the disturbance (jet) to just aft of the throat. This pressurizes the entire wall, giving a net flow separation from the wall with a commensurate reduction in effective area of the exhaust flow at the exit of the nozzle. No shock is generated in the divergent section, the sonic line remains undisturbed and the throat area remains constant.

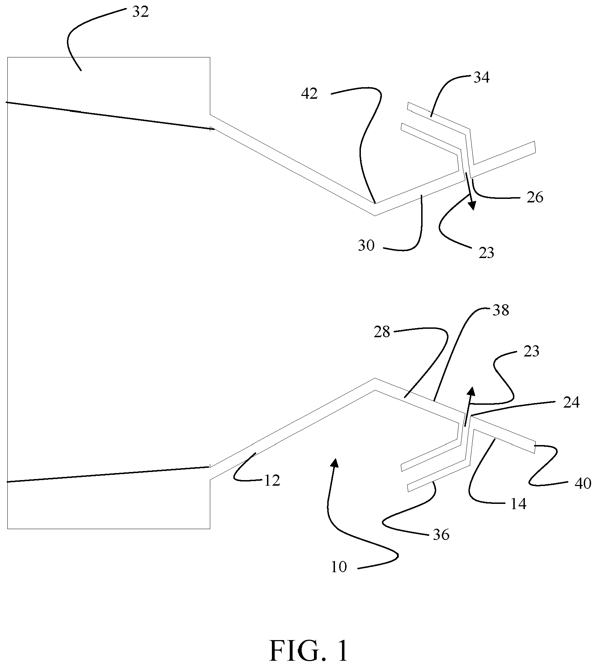

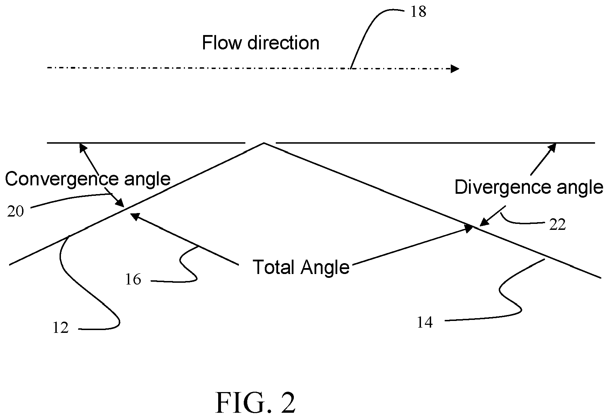

Referring to the drawings, FIG. 1 shows an embodiment having a side cross section of a nozzle 10 with a convergent inlet portion 12 and a divergent outlet portion 14. As represented in FIG. 2, the total angle 16 between the convergent inlet portion and divergent outlet portion is less than or equal to 150°. With respect to a streamwise nozzle axis represented by arrow 18, the convergence angle 20 of the inlet portion is greater than 18° and the divergence angle 22 of the outlet portion is greater than 12°. The exact angles will be chosen by the designer taking into account the maximum area change desired as well as the desired expansion ratio and mass flow rates of the nozzle. Greater divergent angles will generally lead to greater divergence of the jet from the nozzle walls and greater reduction in AE9. In most embodiments, the convergent angle will be steeper than the divergent angle. Divergent angles substantially less than 12 degrees will typically result in shock waves when injection is performed and are not appropriate for the current embodiments. The exact angle of shock onset is dependant upon many factors such as expansion ratio and pressure, and the values employed in the embodiments disclosed herein are typical.

Returning to FIG. 1, flow disturbance in the divergent outlet portion 14 is created in the embodiment shown using fluidic jets (represented by arrows 23) introduced through flow slots 24 and 26 on the lower and upper nozzle surfaces 28 and 30 respectively. Slot 26 is substantially symmetrically opposite slot 24 with respect to the streamwise nozzle axis for symmetrical divergence of flow from the walls. Injection flow is provided by engine bleed or other diverted flow from an engine 32 through ducts 34 and 36. Dimensions of the slots and ducts are not to scale and have been exaggerated for clarity. The injection location is determined based upon the particular nozzle configuration. In most embodiments, the injection location will be between the midpoint 38 and trailing edge 40 of the divergent outlet portion. Injection locations further upstream may be beneficial to some applications and a nominal range of 25% to 75% of divergence length is anticipated for optimum operation. However, where structural depth to accommodate necessary plumbing is present in the nozzle, injection at 100% of the divergence length may be employed.

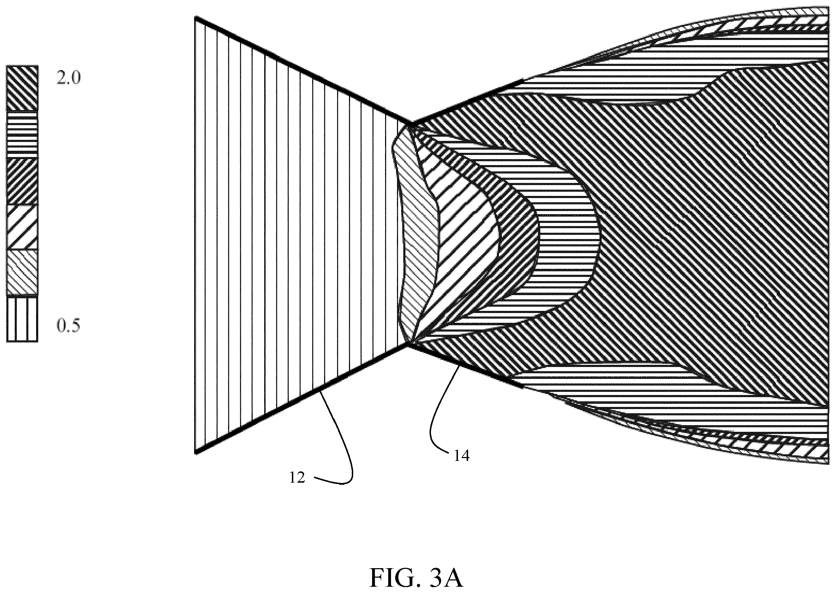

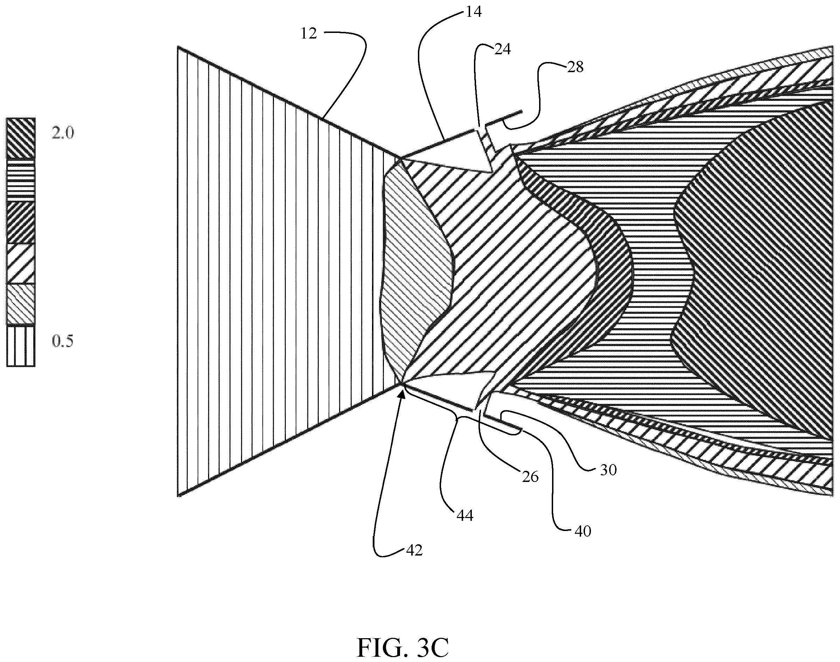

For an example of demonstration of operation of the disclosed embodiment, FIGs. 3A- 3C are a representation of the flow field from a Computational Fluid Dynamics (CFD) solution for the 2D nozzle of the embodiment having a nozzle pressure ratio (NPR) of 5 (which is near the design condition for this nozzle) with varying injection flow described in greater detail subsequently. The Mach profile of the flow is shown in graded contours represented by the hatching in the flow field from Mach 0.5 to Mach 2.0. The fluidic injection takes place on surfaces 28 and 30 in the divergent section through slots 24 and 26. The flow separates aft of the throat 42 and the flow separation zone 44 persists to the exit aperture at the trailing edge 40 of the nozzle thus altering the effective exit area AE9. No shock is formed from including the divergent wall injector since the separation begins just aft of the throat where the Mach number is unity. This concept effectively alters the divergence angle of the nozzle. Increasing injection flow results in an increasing change in effective exit area progressing from FIG. 3A with a lower injection flow to FIG. 3C with highest injection flow.

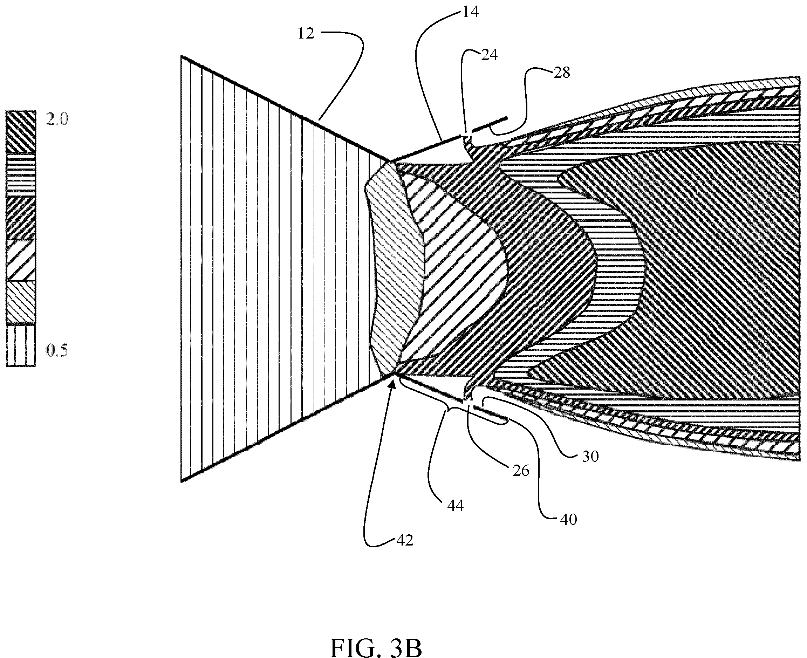

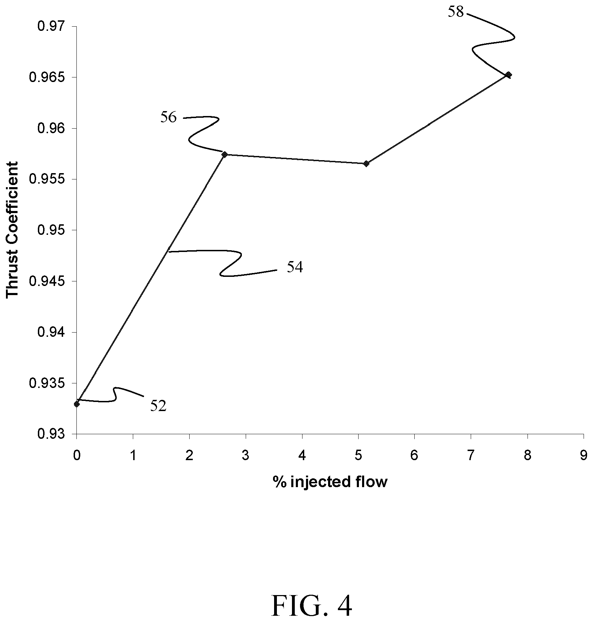

Referring to FIG. 4 in conjunction with FIGs. 3A - 3C, with injected flow described as a percent of total flow through the nozzle (% injected flow), with no injected flow, the nozzle exit area A9 results in a thrust coefficient of 0.933 as represented by point 52 on trace 54 and shown in FIG. 3A. A 2.6% injected flow (total injection from summing both injectors) through slots 24 and 26 results in a reduction in exit area providing a thrust coefficient of 0.957 as represented by point 56 and shown in FIG. 3B. Increasing the injected flow to 7.6% results in area AE9 change for a thrust coefficient of 0.965 as represented by point 58 and shown in FIG. 3C. The optimum amount of injection will depend on nozzle configuration, and the trend in thrust coefficient with injection flow is nonlinear. Injected flow in the range of 0 - 10% is anticipated for AE9 control through a desired performance range.

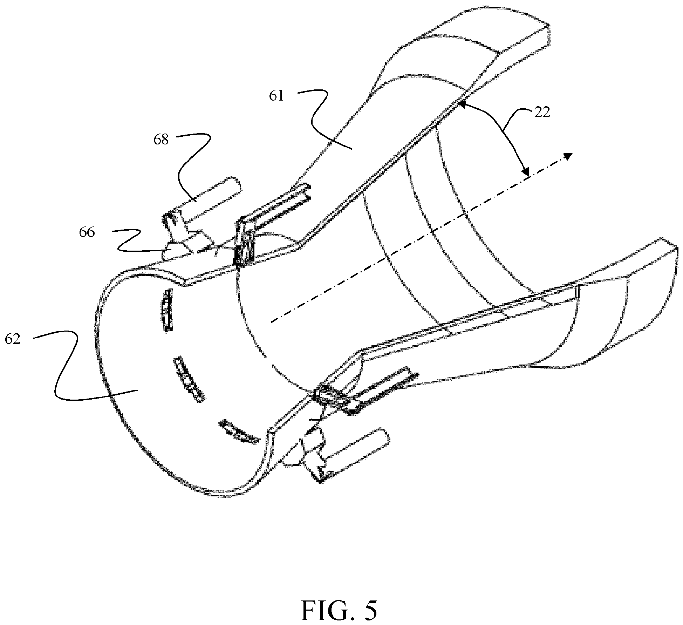

While examples previously provided herein are for 2D nozzles, three dimensional (3D) nozzles employing the apparatus and method may be embodied as shown in FIG. 5. The convergent inlet portion 61 and divergent outlet portion 62 of nozzle 64 have corresponding geometric relationships to the 2D embodiments described with a total angle of less than 150° created by convergence angle of the inlet portion is greater than 18° and divergence angle 22 of the outlet portion greater than 12°. Multiple injection inlets 66 with associated feed conduits 68 are provided around the circumference of the diverging outlet portion of the nozzle. Eight inlets at 45° spacing are shown as examples. However, four inlets at 90° spacing or a greater number of inlets for refined control of wall separation by the jet may be employed. Multiple sets of injection inlets may be spaced along the length of the diverging outlet portion to accommodate multiple design operating conditions of the jet.

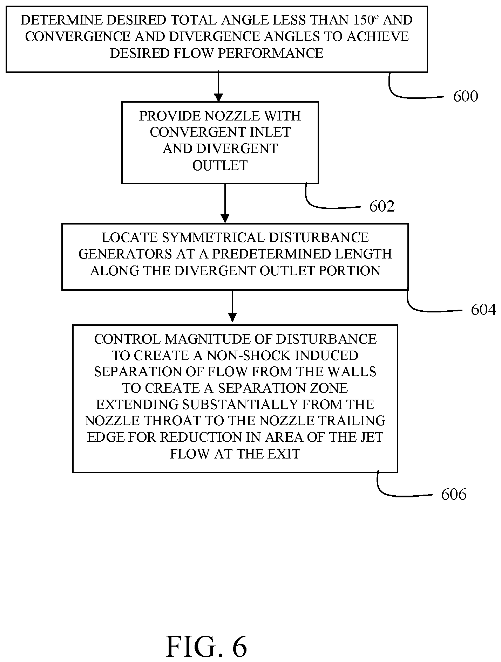

Operation of the embodiments disclosed herein is summarized in FIG. 6. A nozzle with convergent inlet and divergent outlet is provided in step 802 with preliminary determination of a desired total angle and convergence and divergence angles to achieve desired flow performance in step 800. Disturbance generators such as inlet flow slots, vibrating membranes or sonic impulse generators are located substantially symmetrically oppositely at a predetermined length along the divergent outlet portion of the nozzle in step 804 and the magnitude of the disturbance created by the generators is controlled to create a non-shock induced separation of the flow from the wall of the divergent outlet portion to create a separation zone extending substantially from the nozzle throat to the nozzle trailing edge of a magnitude to create a reduction in effective area of the jet flow at the nozzle exit in step 806. A feedback control loop would then be implemented to monitor the current exit flow area and the desired effective exit flow area. The feedback controller would increase/decrease injection to increase/decrease the nozzle effective exit flow area, respectively.

An alternate embodiment of the present disclosure can be presented as an effective exit area control system for a nozzle comprising a convergent - divergent nozzle having a total angle no greater than 150 degrees, where a divergent portion of the nozzle has a wall having a predetermined angle of at least 12° from a streamwise nozzle axis, and it has a first injection flow slot on the divergent portion of the nozzle and a second injection flow slot on the divergent portion of the nozzle substantially opposite the first slot with respect to the axis, which each are controlled between 0% and 4% of total flow to induce flow separation from the wall. Furthermore said predetermined angle of the divergent portion wall induces flow separation to extend upstream from the first and second injection flow slots substantially to a throat of the nozzle pressurizing the divergent portion wall, thus creating a reduction in flow area through an exit of the nozzle.

This embodiment's first and second injection flow slots are located between 25% and 75% and preferably at least 50% of a divergence length from the throat of the nozzle to a trailing edge of the nozzle.

Having now described various embodiments of the invention in detail as required by the patent statutes, those skilled in the art will recognize modifications and substitutions to the specific embodiments disclosed herein. Such modifications are within the scope and intent of the present invention as defined in the following claims.

## Claims

1. A method for nozzle exit area control comprising:
providing a convergent-divergent nozzle with a divergence angle of at least 12°;
locating a pair of disturbance generators at predetermined locations substantially symmetrically opposite on a divergent portion of the nozzle; and,
controlling a magnitude of a disturbance created by the disturbance generators to create non-shock induced flow separation from the divergent portion;
said predetermined locations of the disturbance generators being defined to create a flow separation zone extending substantially from a nozzle throat to a nozzle trailing edge inducing a desired nozzle exit area reduction without generating a shock in the divergent portion when the flow in the convergent-divergent nozzle is accelerated to supersonic speed.

2. The method of claim 1 wherein the step of locating a pair of disturbance generators comprises providing injection flow slots on opposing walls of the divergent portion,
locating the flow injection slots between 25% and 75% and preferably at least 50% of a divergence length from a throat of the nozzle to a trailing edge of the nozzle, and
injecting a flow of between 0% and 10% of total flow through the slots.

3. The method of claim 1 wherein the step of locating disturbance generators comprises locating vibrating membranes on opposing walls of the divergent portion.

4. The method of claim 1 wherein the step of locating disturbance generators comprises locating sonic impulse generators on opposing walls of the divergent portion.

5. A nozzle effective exit area control system comprising:
a convergent - divergent nozzle having a divergent portion wall at a predetermined angle of at least 12° from a streamwise nozzle axis; and,
at least two disturbance generators located in substantially symmetric opposition on the divergent wall to induce flow separation from the divergent wall;
said predetermined divergent wall angle inducing flow separation to extend upstream from the at least two disturbance generators substantially to a throat of the nozzle pressurizing the divergent portion wall and creating a reduction in flow area through an exit of the nozzle without generating a shock in the divergent portion when the flow in the convergent-divergent nozzle is accelerated to supersonic speed;
wherein the magnitude of the disturbance created by the disturbance generators is controlled to create non-shock induced flow separation from a wall of the divergent portion.

6. The nozzle effective exit area control system of claim 6 wherein a convergent portion of the nozzle has a wall at a predetermined angle of at least 18°.

7. The nozzle effective exit area control system of claim 6 wherein the disturbance generators are an injection flow slot,
the injection flow slots are located between 25% and 75% and preferably at least 50% of a divergence length from the throat of the nozzle to the exit of the nozzle, and
the injection flow through the injection slot is controlled between 0% and 10% of total flow.

8. The nozzle effective exit area control system of claim 8 wherein the convergent-divergent nozzle is a 2D nozzle and said at least two disturbance generators comprise a first injection flow slot on a lower divergent wall of the nozzle and a second injection flow slot on an upper divergent wall of the nozzle.

9. The nozzle effective exit area control system of claim 8 wherein the convergent-divergent nozzle is a 3D nozzle and said at least two disturbance generators comprise a plurality of injection flow slots arranged circumferentially around the divergent portion of the nozzle.

## Patentansprüche

1. Verfahren zum Steuern eines Düsenaustrittsbereichs, das aufweist:
Bereitstellen einer Lavaldüse mit einem Divergenzwinkel von wenigstens 12°;
Anordnen eines Paars von Störgeneratoren an vorgegebenen Stellen im Wesentlichen symmetrisch gegenüberliegend an einem divergenten Abschnitt der Düse; und
Steuern des Ausmaßes einer von den Störgeneratoren erzeugten Störung, um ein nicht stoßinduziertes Strömungsablösen von dem divergenten Abschnitt zu erzeugen;
wobei die vorgegebenen Stellen der Störgeneratoren dazu definiert sind, einen Strömungsablösebereich zu erzeugen, der sich im Wesentlichen von einem Düsenhals zu einer Düsenhinterkante erstreckt, wodurch eine gewünschte Düsenaustrittsbereichsreduzierung verursacht wird, ohne in dem divergenten Abschnitt einen Stoß zu erzeugen, wenn die Strömung in der Lavaldüse auf Überschallgeschwindigkeit beschleunigt wird.

2. Verfahren nach Anspruch 1, wobei der Schritt des Anordnens eines Paars von Störgeneratoren das Bereitstellen von Injektionsströmungsschlitzen an gegenüberliegenden Wänden des divergenten Abschnitts aufweist,
das Anordnen der Injektionsströmungsschlitze zwischen 25% und 75% und bevorzugt wenigstens 50% einer Divergenzlänge von einem Hals der Düse bis zu einer Hinterkante der Düse, und
das Injizieren einer Strömung zwischen 0% und 10% der Gesamtströmung durch die Schlitze.

3. Verfahren nach Anspruch 1, wobei der Schritt des Anordnens von Störgeneratoren das Anordnen von Vibrationsmembranen an gegenüberliegenden Wänden des divergenten Abschnitts aufweist.

4. Verfahren nach Anspruch 1, wobei der Schritt des Anordnens von Störgeneratoren das Anordnen von Schallimpulsgeneratoren an gegenüberliegenden Wänden des divergenten Abschnitts aufweist.

5. System zum effektiven Steuern eines Düsenaustrittsbereichs, das aufweist:
eine Lavaldüse, die eine divergente Abschnittswand in einem vorgegebenen Winkel von wenigstens 12° von einer Düsenachse in Strömungsrichtung hat; und
wenigstens zwei Störgeneratoren, die sich im Wesentlichen symmetrisch an der divergenten Wand gegenüberliegen, um ein Strömungsablösen von der divergenten Wand zu verursachen;
wobei der vorgegebene divergente Wandwinkel veranlasst, dass sich das Strömungsablösen von den wenigstens zwei Störgeneratoren stromaufwärts im Wesentlichen zu einem Hals der Düse erstreckt, wodurch die divergente Abschnittswand mit Druck beaufschlagt wird und eine Reduzierung des Strömungsbereichs durch einen Austritt der Düse erzeugt wird, ohne einen Stoß in dem divergenten Abschnitt zu erzeugen, wenn die Strömung in der Lavaldüse auf Überschallgeschwindigkeit beschleunigt wird;
wobei das Ausmaß der von den Störgeneratoren erzeugten Störung gesteuert wird, um ein nicht stoßinduziertes Strömungsablösen von einer Wand des divergenten Abschnitts zu erzeugen.

6. System zum effektiven Steuern eines Düsenaustrittsbereichs nach Anspruch 6, wobei ein konvergenter Abschnitt der Düse eine Wand in einem vorgegebenen Winkel von wenigstens 18° hat.

7. System zum effektiven Steuern eines Düsenaustrittsbereichs nach Anspruch 6, wobei die Störgeneratoren ein Injektionsströmungsschlitz sind,
wobei die Injektionsströmungsschlitze zwischen 25% und 75% und bevorzugt wenigstens 50% einer Divergenzlänge von dem Hals der Düse bis zum Austritt der Düse angeordnet sind, und
die Injektionsströmung durch den Injektionsschlitz zwischen 0% und 10% der Gesamtströmung gesteuert wird.

8. System zum effektiven Steuern eines Düsenaustrittsbereichs nach Anspruch 8, wobei die Lavaldüse eine 2D-Düse ist und die wenigstens zwei Störgeneratoren einen ersten Injektionsströmungsschlitz an einer unteren divergenten Wand der Düse und einen zweiten Injektionsströmungsschlitz an einer oberen divergenten Wand der Düse aufweisen.

9. System zum effektiven Steuern eines Düsenaustrittsbereichs nach Anspruch 8, wobei die Lavaldüse eine 3D-Düse ist und die wenigstens zwei Störgeneratoren eine Vielzahl von Injektionsströmungsschlitzen aufweisen, die umfangsseitig um den divergenten Abschnitt der Düse herum angeordnet sind.

## Revendications

1. Procédé de commande de surface de sortie de tuyère, comprenant de :
produire une tuyère convergente-divergente avec un angle de divergence d'au moins 12° ;
disposer une paire de générateurs de perturbations à des emplacements prédéterminés opposés substantiellement symétriquement sur une partie divergente de la tuyère ; et
commander une magnitude d'une perturbation créée par les générateurs de perturbations pour créer une séparation d'écoulement non-induite par un choc à partir de la partie divergente ;
lesdits emplacements prédéterminés des générateurs de perturbations étant définis pour créer une zone de séparation d'écoulement s'étendant substantiellement depuis un col de tuyère jusqu'à un bord de fuite de tuyère, induisant une réduction désirée de la surface de sortie de tuyère sans générer de choc dans la partie divergente quand l'écoulement dans la tuyère convergente-divergente est accéléré à vitesse supersonique.

2. Procédé selon la revendication 1, dans lequel l'étape de localisation d'une paire de générateurs de perturbations comprend de produire des fentes d'injection d'écoulement sur des parois opposées de la partie divergente, localiser les fentes d'injection d'écoulement entre 25 % et 75 %, et de préférence à au moins 50 % d'une longueur de divergence depuis un col de la tuyère vers un bord de fuite de la tuyère, et
injecter un écoulement d'entre 0 % et 10 % de l'écoulement total à travers les fentes.

3. Procédé selon la revendication 1, dans lequel l'étape de localisation de générateurs de perturbations comprend de disposer des membranes vibrantes sur des parois opposées de la partie divergente.

4. Procédé selon la revendication 1, dans lequel l'étape de localisation de générateurs de perturbations comprend de disposer des générateurs d'impulsions soniques sur des parois opposées de la partie divergente.

5. Système de commande de la surface efficace de sortie d'une tuyère comprenant :
une tuyère convergente-divergente ayant une paroi à partie divergente à un angle prédéterminé d'au moins 12° par rapport à un axe de tuyère dans le sens de l'écoulement ; et
au moins deux générateurs de perturbations situés en opposition substantiellement symétrique sur la paroi divergente pour induire une séparation d'écoulement de la paroi divergente ;
ledit angle de paroi divergente prédéterminé induisant qu'une séparation d'écoulement s'étende en amont des au moins deux générateurs de perturbations substantiellement jusqu'à un col de la tuyère en pressurisant la paroi de la partie divergente et en créant une réduction de la surface d'écoulement à travers une sortie de la tuyère sans générer de choc dans la partie divergente quand l'écoulement dans la tuyère convergente-divergente est accéléré à vitesse supersonique ;
la magnitude de la perturbation créée par les générateurs de perturbations étant contrôlée pour créer une séparation d'écoulement non-induite par un choc d'une paroi de la partie divergente.

6. Système de commande de la surface efficace de sortie d'une tuyère selon la revendication 6, dans lequel une partie convergente de la tuyère a une paroi à un angle prédéterminé d'au moins 18°.

7. Système de commande de la surface efficace de sortie d'une tuyère selon la revendication 6, dans lequel les générateurs de perturbations sont situés entre 25 % et 75 %, et de préférence à au moins 50 % d'une longueur de divergence depuis un col de la tuyère vers la sortie de la tuyère, et
l'écoulement d'injection à travers la fente d'injection est contrôlé entre 0 % et 10 % de l'écoulement total.

8. Système de commande de la surface efficace de sortie d'une tuyère selon la revendication 8, dans lequel la tuyère convergente-divergente est une tuyère 2D et lesdits au moins deux générateurs de perturbations comprennent une première fente d'écoulement d'injection sur une paroi divergente inférieure de la tuyère et une seconde fente d'écoulement d'injection sur une paroi divergente supérieure de la tuyère.

9. Système de commande de la surface efficace de sortie d'une tuyère selon la revendication 8, dans lequel la tuyère convergente-divergente est une tuyère 3D et lesdits au moins deux générateurs de perturbations comprennent une pluralité de fentes d'écoulement d'injection disposés circonférentiellement autour de la partie divergente de la tuyère.
